(19) Europäisches Patentamt
European Patent Office
Office européen des brevets

(11) Numéro de publication : **0 161 170 B1**

(12) **FASCICULE DE BREVET EUROPÉEN**

(45) Date de publication du fascicule du brevet :
09.11.88

(21) Numéro de dépôt : 85400717.6

(22) Date de dépôt : 10.04.85

(51) Int. Cl.⁴ : **G 21 C 7/20, G 21 C 7/10**

(54) **Embout supérieur pour assemblage de combustible nucléaire.**

(30) Priorité : **10.04.84 FR 8405652**

(43) Date de publication de la demande :
**13.11.85 Bulletin 85/46**

(45) Mention de la délivrance du brevet :
**09.11.88 Bulletin 88/45**

(84) Etats contractants désignés :
**BE DE SE**

(56) Documents cités :
**FR-A- 2 070 028**
**FR-A- 2 106 373**
**US-A- 3 212 978**
**NUCLEAR TECHNOLOGY, vol. 59, no. 3, décembre
1982, pages 476-482, ANS, US; H.W. KELLER et al.:
"Development of hafnium and comparison with other
pressurized water reactor control rod materials"**

(73) Titulaire : **FRAMATOME
Tour Fiat 1 place de la Coupole
F-92400 Courbevoie (FR)**

(72) Inventeur : **Leclerq, Joseph
30, Route de Champagne
F-69370 Saint Didier au Mont d'Or (FR)**
Inventeur : **Canat, Jean-Noel
75, rue des Aqueducs
F-69005 Lyon (FR)**

(74) Mandataire : **Fort, Jacques et al
CABINET PLASSERAUD 84, rue d'Amsterdam
F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un embout supérieur pour assemblage de combustible nucléaire de réacteur à eau sous pression, assemblage comprenant un embout inférieur solidarisé d'une pièce de structure appartenant à l'embout supérieur par des tubes guides de réception d'une grappe de crayons de commande.

L'invention trouve une application particulièrement importante, bien que non exclusive, dans les réacteurs dits à variation ou à glissement de spectre, dans lesquels on modifie, au fur et à mesure de l'épuisement du combustible, le spectre énergétique des neutrons dans le cœur. Cette modification s'effectue en changeant la proportion de modérateur dans le cœur, à l'aide de grappes de crayons dont le rôle est de se substituer, dans certains au moins des tubes guides d'un assemblage, à l'eau agissant comme modérateur (EP-A-0108019).

Les assemblages de combustible du type ci-dessus défini comportent généralement des moyens destinés à amortir la chute des grappes de crayons de commande lors des arrêts du réacteur. Ces moyens utilisent souvent un effet de laminage de l'eau contenue dans les tubes guides, qui intervient lorsque les crayons de commande s'approchent de leur position basse. Cet effet de laminage peut notamment être obtenu par un rétreint de la partie basse des tubes guides.

Ces moyens d'amortissement ont l'inconvénient de compliquer notablement la fabrication des tubes guides du fait de la précision requise pour ajuster l'amortissement. Pour compléter l'effet d'amortissement hydraulique par laminage, on a proposé également d'ajouter des moyens élastiques que vient comprimer la grappe en fin de déplacement. Les documents FR-A-2 106 373 et 2 070 028 décrivent chacun un assemblage de combustible conforme au préambule de la revendication 1, muni de moyens d'amortissement hydraulique et d'un ressort d'amortissement. Suivant le document FR-A-2 070 028, l'amortissement hydraulique s'effectue par laminage de l'eau dans les tubes-guides lors de l'enfoncement de la grappe. L'amortissement mécanique est effectué par un ressort porté par le pommeau de la grappe, freinant le recul d'une pièce en forme de coupelle renversée lorsque cette dernière vient en contact avec l'embout supérieur d'un assemblage lors de la chute de la barre. On voit que dans cette disposition, les moyens élastiques sont intégrés au dispositif de commande de la grappe, ce qui oblige à leur donner un faible volume et, corrélativement, limite leur effet d'amortissement. En conséquence, ils n'ont un effet véritablement significatif que lorsque la grappe est de poids modéré et comporte donc un faible nombre de crayons de commande.

Les assemblages de combustible nucléaire destinés aux réacteurs à variation de spectre soulèvent un problème supplémentaire, du fait que chaque assemblage doit être prévu pour recevoir une grappe de crayons de commande de taux de modération, en plus de la grappe de crayons de commande absorbants ou à sa place.

L'invention vise à fournir un embout supérieur répondant mieux que ceux antérieurement connus aux exigences de la pratique, notamment en ce qu'il permet un amortissement satisfaisant lors de la chute des grappes de commande, grâce à des moyens élastiques dont la conception ne se heurte pas à des contraintes d'encombrement.

Dans ce but, l'invention propose un assemblage conforme à la revendication 1.

Dans le cas d'un embout destiné à un assemblage de réacteur à variation de spectre, assemblage prévu pour recevoir une grappe de crayons absorbants et/ou une grappe de crayons de modification du taux de modération par chasse de l'eau contenue dans des tubes guides, les moyens élastiques de l'embout peuvent comporter deux ressorts concentriques et deux éléments de butée coopérant chacun avec l'une des grappes, dont l'un est constitué par la plaque. Les ressorts peuvent être disposés de façon qu'un seul des deux soit comprimé par la chute d'une des grappes, tandis que les deux ressorts sont comprimés et assurent une fonction d'amortissement lors de la chute de l'autre grappe. Les deux ressorts peuvent alors être disposés coaxialement l'un à l'autre.

L'embout peut être complété par des moyens élastiques supplémentaires destinés à être comprimés par une plaque supérieure de cœur et à compléter ainsi la fonction d'anti-envol des ressorts coaxiaux, c'est-à-dire à s'opposer au soulèvement de l'assemblage par l'écoulement ascendant de l'eau servant de modérateur et de réfrigérant, lors du fonctionnement du réacteur.

Dans un mode avantageux d'exécution de l'invention, l'embout constitue un bloc indépendant du reste de l'assemblage qui comporte, en plus de l'embout inférieur et des tubes guides, une simple table supérieure ajourée, fixée de façon permanente aux tubes guides. Ainsi est-il possible de remplacer l'embout en cas d'avarie de ce dernier ou, au contraire, d'utiliser successivement l'embout sur plusieurs assemblages, l'embout étant facilement enlevé d'un assemblage complètement épuisé ou d'un assemblage défectueux.

L'invention sera mieux comprise à la lecture de la description qui suit de modes particuliers d'exécution, donnés à titre d'exemples non limitatifs. La description se réfère aux dessins qui l'accompagnent, dans lesquels :

la Figure 1 montre un embout supérieur selon un premier mode d'exécution, en élévation et en coupe suivant le plan I-I de la Figure 2,

la Figure 2 représente une fraction de l'embout de la Figure 1, en vue de dessus,

la Figure 3, similaire à la Figure 1, montre une variante d'exécution de l'embout.

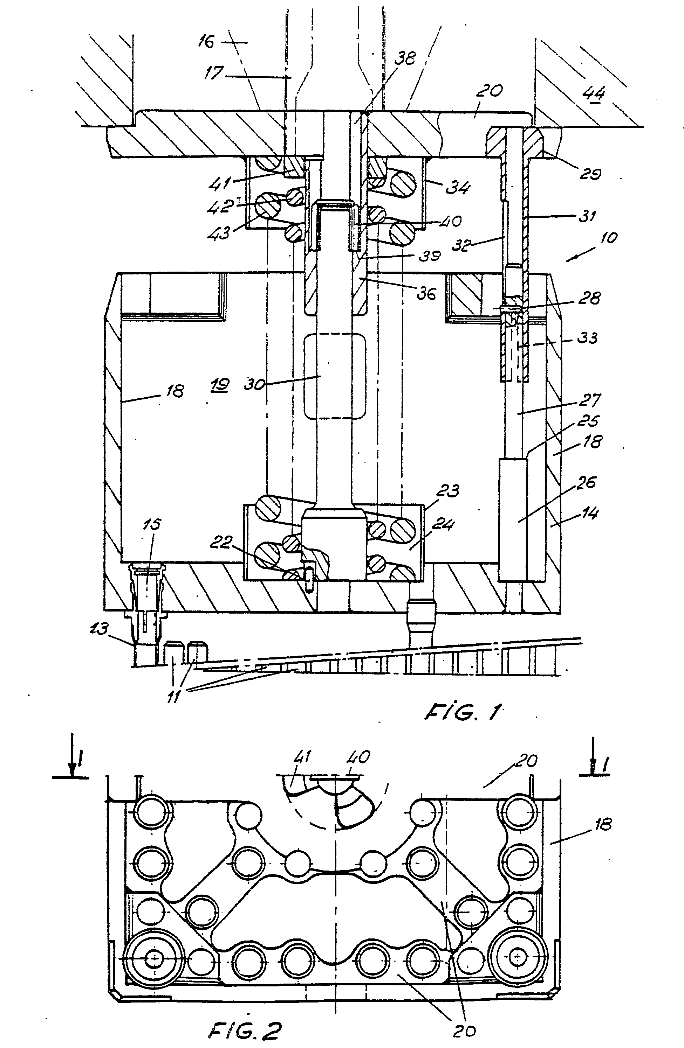

L'embout supérieur 10 montré en Figures 1 et 2 est destiné à un assemblage combustible pour réacteur à eau légère. Cet assemblage peut avoir une constitution générale connue et, pour cette raison, ne sera pas décrit en détail. Seuls sont montrés sur la Figure 1, en plus de l'embout 10, quelques crayons de combustible 11 et des tubes guides 13 dont certains au moins assurent le maintien mécanique de l'assemblage combustible en reliant l'embout supérieur 10 et un embout inférieur non représenté. Des grilles (non représentées), réparties longitudinalement le long des tubes guides, assurent le maintien des crayons.

Dans le mode d'exécution montré en Figure 1, les tubes guides 13 sont fixés à une pièce de structure 14 formant l'ossature de l'embout 10. La pièce de structure 14 comporte une plaque d'embase à laquelle les tubes guides 13 sont fixés. Dans le cas illustré en Figure 1, les tubes guides 13 sont fixés par manchon et douille vissée 15. Ils pourraient être fixés par d'autres procédés, par exemple par soudage. La pièce de structure 14 comporte également des plaques verticales 18 qui, avec la plaque d'embase, définissent un espace intérieur formant caisson 19. La plaque d'embase est percée d'ouvertures (non représentées) permettant la libre circulation de l'eau.

Les tubes guides 13 sont prévus pour recevoir des crayons de commande (non représentés). L'embout montré sur la Figure 1 est destiné à un assemblage dont les tubes guides sont prévus pour permettre le passage de crayons de commande qui sont soit des crayons contenant un matériau absorbant les neutrons, soit des crayons de modification du taux de modération, permettant de modifier le volume de modérateur dans l'assemblage combustible, afin de permettre un fonctionnement selon le mode dit « à variation de spectre ». Les crayons de commande de chaque groupe sont réunis en grappe par une monture mobile, qu'on appelle couramment « araignée ». Les deux araignées 16 et 17 sont disposées coaxialement. Leurs parties basses sont représentées, dans la position où elles reposent sur l'embout, en traits mixtes.

L'araignée 16 portera généralement la grappe de crayons absorbants et sera alors suspendue à un tube de manœuvre entourant une tige de manœuvre de l'araignée 17 qui porte les crayons de commande du taux de modération (crayons contenant un matériau fertile). La grappe absorbante coiffe ainsi la grappe fertile. Elle peut être déplacée à l'aide d'un mécanisme à cliquets désaccouplable permettant de la lâcher dans le cœur.

La pièce de structure 14, qui peut être fabriquée par moulage, contient l'ensemble des moyens d'amortissement et d'anti-envol dont est équipé l'embout 10.

Les moyens d'amortissement comportent une pièce d'appui 20, pouvant coulisser par rapport à la pièce de structure 14 dans la direction de l'axe des tubes guides 13, munie de moyens de guidage par rapport à la pièce de structure et repoussée par les moyens élastiques d'amortissement intégrés à l'embout vers la position montrée en Figure 1. Cette pièce d'appui 20 est prévue pour recevoir le choc de l'araignée, ou de l'une des araignées (araignée 16 dans le cas de la Figure 1) en cas de chute de la grappe de crayons correspondante, par exemple pour arrêter le réacteur.

Les moyens de guidage comprennent un moyeu 30 fixé au centre de la plaque d'embase et faisant saillie vers le haut. L'orientation du moyeu 30 est fixée par engagement d'une clavette 22, fixée à la plaque d'embase, dans une encoche du moyeu. La plaque d'embase porte également une virole circulaire 23, coaxiale au moyeu 30. Le moyeu et la virole peuvent être fixés par soudage. La virole 23 délimite une zone 24 de réception de la zone d'appui des moyens élastiques.

Les moyens de guidage comportent également des pions 26, par exemple au nombre de quatre, fixés chacun à proximité d'un coin de la plaque d'embase, en saillie vers le haut. Un seul de ces pions 26 est représenté. Il comporte une partie haute de diamètre réduit 27, séparée de la partie basse par un épaulement 25.

Aux moyens de guidage qui viennent d'être décrits et qui sont portés par la pièce de structure 14 sont associés des moyens complémentaires fixés à la pièce d'appui 20. Cette dernière se présente sous forme d'un plateau dans lequel sont ménagées de larges ouvertures de circulation d'eau ou d'une pièce annulaire comportant des ailes radiales en nombre égal à celui des pions 26. Dans la pièce 20 sont ménagés des trous 29 de réception de fourreaux 31 alignés avec les pions 26. L'alésage de chaque fourreau 31 a un diamètre correspondant à celui de la partie 27 de diamètre réduit du pion correspondant. Le diamètre externe du fourreau correspond à celui de la partie basse du pion 26. Chaque fourreau 31 est emprisonné sur le pion 26 correspondant. Pour cela, le fourreau présente une rainure 32 parallèle à l'axe dans laquelle s'engage une clavette 28 emmanchée dans le pion 27. Pour qu'il soit possible d'engager le fourreau 31 alors que la clavette 28 est en place, la rainure 32 se prolonge par une rainure débouchante en baïonnette 33 présentant une partie axiale et une partie circonférentielle, débouchant à la base de la rainure 32. Pour mettre en place le fourreau 31, il suffit donc de présenter la rainure 33 en face de la clavette 28, de l'enfoncer puis de faire tourner le fourreau 31, de 90° par exemple, de façon que la clavette se trouve au fond de la rainure 32. On peut alors fixer, par exemple par soudage, le fourreau 31 à la pièce d'appui 20.

A la pièce d'appui 20 sont fixés, par exemple par soudage, une virole 34 identique à la virole 23 et un moyeu creux 36 coopérant avec le moyeu 30. L'alésage du moyeu 36 présente un diamètre tel que les moyeux 36 et 30 puissent coulisser à frottement doux l'un sur l'autre. Dans la partie haute de l'alésage sont ménagées des rainures 38, au nombre de deux par exemple, s'étendant à peu près sur les deux tiers de la hauteur du moyeu, définissant des épaulements 39. Ces épaulements constituent des butées pour une clavette 40 en forme de U, déterminant la position de repos de la pièce d'appui 20. La fixation de la clavette 40 peut être effectuée par soudage alors que la pièce d'appui 20 est amenée à force dans sa position extrême basse, définie par l'appui des fourreaux 31 sur les épaulements 25.

Les moyens élastiques d'amortissement comportent un premier ressort 43 emprisonné entre la pièce d'appui 20 et la pièce de structure 14, dont les parties terminales sont entourées par les viroles 23 et 34. L'embout montré en Figure 1 étant destiné à un assemblage pouvant recevoir, d'une part, une grappe de crayons absorbants, d'autre part, une grappe de crayons de modification du spectre, l'embout comporte également une bague 41 montée coulissante sur le moyeu 36 et un ressort 42 coaxial au ressort 43, mais en appui sur la pièce de structure 14 et sur la bague 41. Le ressort 42 tend à maintenir la bague 41 en appui contre la pièce 20. Dans cette dernière sont ménagées des échancrures de passage de la partie basse de l'araignée 17, permettant à cette dernière de venir prendre appui sur la bague 41 (comme représenté en traits mixtes) et de la refouler vers le bas.

Lorsque l'assemblage est en place dans un réacteur et que la plaque supérieure de cœur 44 est en place, la poussée exercée par le réfrigérant en circulation ascendante est transmise par la pièce de structure 14 aux ressorts 42 et 43 qui prennent à leur tour appui sur la pièce 20. En cas de chute de la grappe portée par l'araignée 17 (grappe de crayons de modification du taux de modération en général), l'araignée 17 vient en butée contre la bague 41 et l'enfance en surmontant la force élastique exercée par le ressort 42. Celui-ci amortit le choc en constituant butée élastique.

En cas de chute de la grappe portée par l'araignée 16, cette dernière vient frapper la pièce d'appui 20 qui s'enfonce en comprimant les ressorts 42, par l'intermédiaire de la bague 41, et 43. Ces ressorts agissent conjointement comme butées élastiques de fin de course.

De même, les deux ressorts interviennent en cas de chute simultanée des deux grappes, par exemple provoquée pour arrêter le fonctionnement du réacteur.

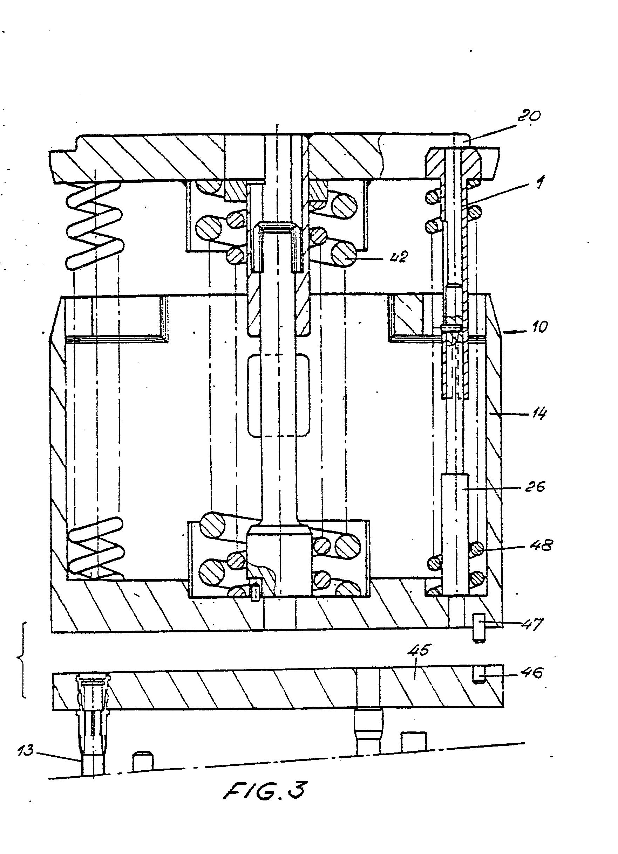

Dans la variante de réalisation de l'invention montrée en Figure 3 (où les organes correspondants à ceux de la Figure 1 sont désignés par le même numéro de référence), l'embout 10 constitue un bloc manipulable indépendamment du squelette de l'assemblage proprement dit.

Dans l'assemblage proprement dit, l'extrémité supérieure des tubes guides 13 est fixée, par des organes démontables tels que des manchons ou par soudage, à une simple table supérieure 45 largement échancrée par des ouvertures (non représentées) de passage de l'eau. Ces ouvertures correspondent à celles qui sont pratiquées dans la plaque d'embase de la pièce de structure 14. La table 45 présente également une forme externe correspondant à celle de la pièce de structure 14. Elle lui est fixée par des moyens démontables non représentés, qui peuvent être constitués par des vis traversant la plaque d'embase de la pièce de structure 14 et engagées dans des trous taraudés de la table. Les vis peuvent être bloquées en rotation après montage, par exemple par déformation d'une coiffe mince qu'elles présentent dans un chambrage de forme correspondante de la plaque d'embase.

Pour éviter toute erreur d'orientation lors du montage, des moyens de détrompage sont prévus sur la pièce de structure 14 et la table 45. Dans le mode de réalisation illustré en Figure 3, ils comportent au moins un pion 47 (clavette ou chemise fendue) destiné à s'engager dans un trou 46 de forme correspondante de la table 45.

Dans un autre mode de réalisation, la table 45 est solidarisée de la pièce de structure 14 par les seuls pions 47 s'engageant dans les trous 46, judicieusement répartis sur le pourtour de la pièce 14 et de la table 45.

Cette disposition permet, en cas de défaut ou de défaillance d'un élément de l'embout 10, de ne remplacer que ce dernier, ce qui n'implique que des opérations simples.

Entre la pièce de structure 14 et la pièce d'appui 20 de l'embout de la Figure 3 sont comprimés, en plus des ressorts 42 et 43, des ressorts 48 disposés chacun autour d'un des pions 26. L'action des ressorts 48 s'ajoute à celle des ressorts 42 et 43 et permet d'augmenter la force exercée sur l'assemblage par la plaque supérieure de cœur 44, force s'opposant au soulèvement de l'assemblage par l'action de l'eau qui circule dans le cœur.

L'embout qui vient d'être décrit sera prévu de façon à pouvoir être saisi par une pince de manutention, ce qui, souvent, conduira à le compléter par une gorge périphérique ou d'autres moyens facilitant la préhension.

## Revendications

1. Assemblage de combustible nucléaire de réacteur à eau sous pression, comprenant un embout supérieur et un embout inférieur solidarisé d'une pièce de structure (14) appartenant à l'embout supérieur par des tubes guides (13) de réception d'une grappe de crayons de commande, caractérisé en ce que l'embout supérieur comprend également une pièce (20) d'appui de la grappe (16) en fin de chute de celle-ci, des moyens (30, 36, 26, 31) de guidage de ladite pièce d'appui (20) parallèlement à l'axe des tubes guides et des moyens élastiques (43) intégrés à l'embout et disposés entre la pièce de structure (14) et la pièce d'appui (20) pour freiner la grappe en fin de chute.

2. Assemblage selon la revendication 1, caractérisé en ce que lesdits moyens élastiques (43) comportent un ressort disposé autour de moyens de guidage coulissants (30, 36) placés dans l'axe de l'assemblage.

3. Assemblage selon la revendication 2, caractérisé en ce que les moyens de guidage comportent également des éléments coulissants l'un sur l'autre (26, 31) placés à proximité de certains au moins des coins de l'assemblage.

4. Assemblage selon la revendication 3, caractérisé en ce que certains au moins des moyens coulissants sont entourés chacun par un ressort (48) comprimé entre la pièce de structure (14) et la pièce d'appui (20).

5. Assemblage selon l'une quelconque des revendications précédentes, caractérisé en ce que les moyens de guidage comportent des éléments de butée (39, 40) coopérant pour limiter l'écartement de la pièce de structure (14) et de la pièce d'appui (20) sous l'action des moyens élastiques.

6. Assemblage selon l'une quelconque des revendications précédentes, caractérisé en ce que la pièce de structure (14) comporte une plaque d'embase destinée à être reliée aux tubes guides (13) et des plaques verticales (18) qui définissent avec la plaque d'embase un espace intérieur formant caisson (19) de protection des moyens de guidage et des moyens élastiques.

7. Assemblage de réacteur à variation de spectre selon l'une quelconque des revendications précédentes, prévu pour recevoir une grappe de crayons absorbants et une grappe de crayons de modification du taux de modération par chasse de l'eau contenue dans certains au moins des tubes guides, caractérisé en ce que les moyens élastiques intégrés à l'embout comportent deux ressorts concentriques (42, 43) et deux éléments de butée (41, 20) dont l'un est constitué par la pièce d'appui (20), coopérant chacun avec l'une des grappes (17, 16).

8. Assemblage selon la revendication 7, caractérisé en ce que les ressorts sont disposés de façon qu'un seul des deux (42) soit comprimé par la chute d'une des grappes (17) tandis que les deux ressorts (42, 43) sont comprimés et assurent une fonction de freinage lors de la chute de l'autre grappe (16).

9. Assemblage selon l'une quelconque des revendications précédentes, caractérisé en ce que l'embout supérieur constitue un bloc indépendant du reste de l'assemblage qui comporte, en plus de l'embout inférieur et des tubes guides, une table supérieure ajourée (45), fixée de façon permanente aux tubes guides (13) et fixée de façon amovible à la pièce de structure (14) de l'embout supérieur.

**Claims**

1. Nuclear fuel assembly for pressurized water reactor, comprising an upper end piece and a lower end piece secured to a structural element (14) belonging to the upper end piece by guide tubes (13) arranged for receiving a cluster of control rods, characterized in that the upper end piece further comprises a support member (20) for receiving the cluster (16) at the end of the fall thereof, means (30, 36, 26, 31) for guiding said support member (20) parallel to the axes of the guide tubes and resilient means (43) contained within the end piece and disposed between the structural member (14) and the support member (20) for braking the cluster at the end of the fall.

2. Assembly according to claim 1, characterized in that said resilient means (43) comprises a spring located about mutually slidably guiding means (30, 36) located along the axis of the assembly.

3. Assembly according to claim 2, characterized in that the guiding means further comprises mutually slidable elements (26, 31) located in close proximity to some at least of the corners of the assembly.

4. Assembly according to claim 3, characterized in that some at least of the sliding means are each surrounded by a spring (48) which is compressed between the structural element (14) and the support member (20).

5. Assembly according to any one of the preceding claims, characterized in that the guiding means comprises mutually cooperating abutting elements (39, 40) for limiting spacing apart of the structural element (14) and of the support member (20) under the action of the resilient means.

6. Assembly according to any one of the preceding claims, characterized in that the structural element (14) comprises a base plate arranged for connection to the guide tubes (13) and vertical plates (18) for defining with the base plate a box-shaped internal space (19) for protection of the guiding means and resilient means.

7. Assembly for a spectral shift reactor according to any one of the preceding claims, arranged for receiving a cluster of absorbing rods and a cluster of rods for modifying the moderation rate by forcing out water contained in some at least of the guide tubes, characterized in that the resilient means contained in the end piece comprises two mutually coaxial springs (42, 43) and two abutting elements (41, 20) one of which consists of the support member (20), each cooperating with one of the clusters (17, 16).

8. Assembly according to claim 7, characterized in that the springs are so located that one (42) only of the two springs is compressed upon fall of one of said clusters (17) while the two springs (42, 43) are compressed and fulfil a braking function upon fall of the other cluster (16).

9. Assembly according to any one of the preceding claims, characterized in that the upper end piece forms a block independent of the rest of the assembly which is provided, in addition to the lower end piece and to the guide tubes, with an upper perforated table (45) permanently fixed to the guide tubes (13) and removably connected to the structural element (14) of the upper end piece.

**Patentansprüche**

1. Nukleares Brennelementbündel für einen Druckwasserreaktor, aufweisend einen oberen Ansatz und einen unteren Ansatz, der fest mit einem zum oberen Ansatz gehörigen Bauelement (14) durch Führungsrohre (13) zur Aufnahme eines Bündels von Regelstäben verbunden ist, dadurch gekennzeichnet, daß der obere Ansatz zudem ein Element (20) zum Abstützen des Bündels (16) am Ende von dessen Fall, Mittel (30, 36, 26, 31) zum Führen des Abstützelementes (20) parallel zur Achse der Führungsrohre und elastische Mittel (43), die im Ansatz eingebaut sind und zwischen dem Bauelement (14) und dem Abstützelement (20) angeordnet sind, um das Bündel am Fallende abzubremsen, aufweist.

2. Bündel nach Anspruch 1, dadurch gekennzeichnet, daß die elastischen Mittel (43) eine Feder umfassen, die um die in der Bündelachse liegenden, verschiebbaren Führungsmittel (30, 36) herum angeordnet ist.

3. Bündel nach Anspruch 2, dadurch gekennzeichnet, daß die Führungsmittel in gleicher Weise übereinander verschiebbare Elemente (26, 31) umfassen, die in der Nähe von wenigstens bestimmten der Ecken des Bündels liegen.

4. Bündel nach Anspruch 3, dadurch gekennzeichnet, daß wenigstens bestimmte der verschiebbaren Mittel jeweils von einer Feder (48) umgeben sind, die zwischen dem Bauelement (14) und dem Abstützelement (20) zusammengedrückt ist.

5. Bündel nach einem beliebigen der vorhergehenden Ansprüche, dadurch gekennzeichnet, daß die Führungsmittel Anschlagelemente (39, 40) umfassen, die zusammenwirken, um den Abstand des Bauelementes (14) und des Abstützelementes (20) unter Wirkung der elastischen Mittel zu begrenzen.

6. Bündel nach einem beliebigen der vorhergehenden Ansprüche, dadurch gekennzeichnet, daß das Bauelement (14) eine Grundplatte, die zur Verbindung mit den Führungsrohren (13) bestimmt ist, und vertikale Platten (18) umfaßt, die mit der Grundplatte einen unteren Raum abgrenzt, der einen Behälter (19) zum Schutz der Führungsmittel und der elastischen Mittel bildet.

7. Reaktorbündel mit Spektrumänderung nach einem beliebigen der vorhergehenden Ansprüche, das zur Aufnahme eines Bündels absorbierender Stäbe und eines Bündels von Stäben zur Modifikation des Moderationsgrades durch Spülung des in wenigstens bestimmten der Führungsrohre enthaltenen Wassers vorgesehen ist, dadurch gekennzeichnet, daß die eingebauten elastischen Mittel am Ansatz zwei konzentrische Federn (42, 43) und zwei Anschlagelemente (41, 20) umfassen, von denen eines durch das Abstützelement (20) gebildet ist, jeweils zusammenwirkend mit einem der Bündel (17, 16).

8. Bündel nach Anspruch 7, dadurch gekennzeichnet, daß die Federn auf solche Weise angeordnet sind, daß eine einzige der beiden (42) durch den Fall eines der Bündel (17) zusammengedrückt wird, während die beiden Federn (42, 43) zusammengedrückt sind und eine Abbremsfunktion anläßlich des Falls des anderen Bündels (16) sicherstellen.

9. Bündel nach einem beliebigen der vorhergehenden Ansprüche, dadurch gekennzeichnet, daß der obere Ansatz einen vom Rest des Bündels unabhängigen Block bildet, der außer dem unteren Ansatz und den Führungsrohren eine obere Lochplatte (45) umfaßt, die auf Dauer an den Führungsrohren (13) befestigt ist und abnehmbar am Bauelement (14) des oberen Ansatzes befestigt ist.

FIG. 1

FIG. 2

1

FIG.3